# EUROPEAN PATENT APPLICATION

(11) **EP 4 685 110 A1**
(43) Date of publication of application: **28.01.2026**
(21) Application number: 24191021.5
(22) Date of filing: 25.07.2024
(51) Int. Cl.: C01B 32/15

(54) **CARBONCOATING**

(71) Applicant: Jenei, Istvan, 91710 Gunzenhausen (DE); Pal, Balik, 2621 Veroce (HU)
(72) Inventor: Jenei, Istvan, 91710 Gunzenhausen (DE); Pal, Balik, 2621 Veroce (HU)
(74) Representative: Wittmann, Günther

(57) **Abstract**

The invention discloses a method of preparing a colloid liquid for carbonization, comprising the following steps:
- Heating a disaccharide derivative to a first temperature range, in which the disaccharide derivative melts;
- Heating the disaccharide derivative to a second temperature range, in which the disaccharide derivative is carbonized, wherein the temperature of the second temperature range is higher than the temperature of the first temperature range; and
- Directing a superheated stream on the disaccharide derivative; and
a method of carbonating a substrate comprising the following steps:
- Coating the substrate with the colloid liquid; and
- Sintering the substrate.

## Description

### Field of the Invention

The present invention relates to carbon coating, particularly to carbon coating of porous and microcellular substances (e.g. malm, zeolite, etc.).

The present invention pertains to a nano carbon coating process composed of inorganic materials with a large specific surface area, including soft malm and other porous and microcellular substances. The present invention covers the production of the nano coating material, its application, and the associated processes.

### Related Art

Creating a liquid coating according to methods of the prior art for microcellular substances using carbon or coal involves suspending finely ground coal particles in a liquid medium along with any necessary additives or binders.

In a first step a liquid medium is chosen that is compatible with both the microcellular substance and the coal particles. Common options include water, organic solvents, or specialty coatings formulated for this purpose. The liquid medium should have properties that facilitate the suspension of coal particles while allowing for easy application and subsequent drying.

In a second step the coal is ground into a fine powder. The finer the particles, the better they will disperse and adhere to the microcellular substance. Optionally, treat the coal powder with surface modifiers or dispersants to improve its suspension properties in the liquid medium.

In a third step the desired quantity of liquid medium is metered into a suitable container. Gradually the finely ground coal powder is added continuously to the liquid medium while stirring. Thorough mixing has to be ensured to achieve a homogeneous suspension of coal particles in the liquid. Optionally, binders, dispersants or other additives may be added to improve adhesion, stability or other desired properties of the coating.

In a fourth step the coating liquid in applied onto the surface of the microcellular substance using a suitable method such as spraying, brushing, dipping, or rolling. Even coverage of the surface with the coating liquid has to be achieved to achieve uniform coating thickness.

Thereafter, the coated microcellular substance must dry thoroughly to remove the liquid medium and any volatile components.

In the prior art, the cleanest carbons can be produced by thermally treating the disaccharide derivatives (C₁₂H₂₂O₁₁). Coal production in this way is expensive and the grinding into nanoparticles is also particularly costly. Impregnation is followed by drying and the nanoparticles remain in the microcell structure. The bond between the substrate and the nano-carbon is weak and segregation is very possible. Therefore, binding additives are generally used in this technology. At this technology, the nano-carbon powder can obstacle the cellular microstructure. With this technology, the carbon coating of the entire cross action is difficult.

### General Description of the Invention

It is an object of the present invention to overcome the disadvantages of the prior art and to provide a more economic method of nano carbon coating.

The object of the present invention is achieved by a method of preparing a colloid liquid for carbonization according to claim 1 and a method of carbonating a substrate according to claim 6.

The present invention discloses a method of preparing a colloid liquid for carbonization. In a first step a disaccharide derivatives is heated to a first temperature range to lose its crystal water content. The method further comprises the step of heating the disaccharide derivative to a second temperature range, in which the disaccharide derivative is carbonized, wherein the temperature of the second temperature range is higher than the temperature of the first temperature range. The method further comprises the step of directing a superheated stream on the melted and carbonized disaccharide derivative. According to the invention the nano carbon particles are formed by dehydration of the melted and carbonized disaccharide derivatives.

The disaccharide derivative may be C₁₂H₂₂O₁₁. The disaccharide derivative may be sugar, such as sugar from cane. Thereby, nano carbon contamination can be avoided.

The first temperature range may be between 180°C to 190°C. The second temperature range may be between 220°C to 230°C. There are two phases of heating, firstly melting and loss of the crystal water and secondly carbonization at approximately 220°C to 230°C.

The temperature of the superheated stream may be in a range between 220°C to 230°C. in one embodiment, boiled water can be used, which is immersed in the sugar heated to 220°C. The process can also be carried out under pressure. The lower the temperature difference between the carbonized disaccharide and the steam (water), the faster the dissolution of the nano carbon and the formation of the colloidal liquid.

The invention also discloses a method of carbonating a substrate comprising the step of coating the substrate with the above-described colloid liquid and the step of sintering the substrate. The substrate is coated with nanocarbon particles by sintering.

The step of sintering the substrate may comprise the step of pre-sintering the substrate in a third temperature range, and the step of post-sintering the substrate in a fourth temperature range, wherein the temperature of the fourth temperature range is higher than the temperature of third temperature range. The substrate is coated with nano carbon particles by pre-sintering and/or post-sintering.

The third temperature range may range from approximately 150°C to approximately 250°C.

The fourth temperature range may range from approximately 250°C to approximately 400°C.

The step of sintering the substrate and/or post sintering the substrate in a fourth temperature range may be carried out in an inert gas atmosphere.

The method may comprise the step of adding an anticoagulant additive to the colloid liquid. A suitable anticoagulant may comprise a magnesium compound with a concentration of approximately of 1 % or more.

The substrate may be a microcellular structure. The microcellular structure may comprise a material with a porous and a microcellular structure, such as malm, zeolite, silica gel, etc. The substrate coated with the nano carbon layer according to the present invention is a good bacterial carrier, and with this bacterial carrier the seed can be coated or the substrate forming the bacterial carrier may be put close to the seed.

The invention also discloses a substrate coated with nano carbon by the above method.

The invention also discloses a seed covered with the coated substrate.

### Detailed description of the Invention

Disaccharide derivatives (C₁₂H₂₂O₁₁), which cannot undergo fermentation before inversion, are used for creating the colloid fluid. Initially, these disaccharide derivatives lose their crystal water content through heating in a boiler. To prevent combustion damage, fluidized bed heat transfer is preferred in the boiler. Subsequent heating within the range of 180°C to 220°C transforms them into nano carbon. However, before the solid state is reached, the nano carbon is converted into a liquid state using the superheated steam. The nano carbon particles within the colloidal liquid exhibit Brownian motion, allowing them to remain suspended without sedimentation. The processed colloid liquid is stable, non-flammable, and frost-resistant, when undiluted.

The invention discloses the formulation and preparation of a specific colloid liquid suitable for the subsequent carbonization process described earlier. This colloid liquid serves as a critical component in achieving successful nano carbon coating.

The porous and microcellular material, i.e. substrate must be impregnated with the colloidal liquid. In one embodiment, this can be achieved through immersion or vacuum methods, ensuring thorough saturation. Several factors influence the impregnation process, such as the cell structure of the porous material, the temperature of both the substrate and the colloid liquid, which should in one embodiment not exceed a temperature of 250°C, and the dilution level of the colloid liquid.

In one embodiment he impregnated material undergoes pre-sintering followed by final sintering. During pre-sintering, preferably within the range of 150°C to 250°C, the water that acta as the carrier material for nano carbon particles must be vaporized using an appropriate drying system. Rotary kilns or simply heated conveyor belts may be used for the drying process.

The final sintering occurs at temperatures between 250°C and 400°C, converting all hydrocarbons into nano carbon by the following reaction:

C₁₂H₂₂O₁₁ -> 12C + 11H₂O.

To prevent nano carbon combustion, the final sintering process takes place in a closed rotary oven with an external heating system, using an inert gas atmosphere. Without the use of inert gas, carbon dioxide and carbon monoxide are produced during the final sintering stage.

The process according to the present invention involves applying the colloidal liquid containing nano carbon to a substrate. The final sintering process converts all hydrocarbons into nano carbon, resulting in the desired coating.

In one embodiment, it is possible to combine pre-sintering and final sintering into a single step.

Diluting the colloid liquid allows precise adjustment of the nano carbon content within the substrate.

The substrate can vary in size, from fine powder to several-centimeter pieces.

Depending on the colloidal liquid's dilution, the granulation of the substrate is affected. The colloidal liquid serves a dual purpose, namely impregnating the substrate and binding small particles of the powder. The colloidal liquid not only impregnates the substrate, but also binds the small particles of the powder, allowing for granulation.

The granulation effect can also be regulated by the anticoagulant additive, such as a magnesium compound with a concentration of approximately of 1 % or more.

Large carbonized substrate pieces (several centimeters) can be ground to achieve any desired particle size.

The coated substrate can be used in various fields, including agriculture, construction, filter technology, construction, soil reclamation, soil conditioner, water treatment, healthcare industry and other relevant areas. Its unique properties make it suitable for specific applications within these domains.

The carbonization process according to the present invention can be applied to create materials for floating and sedimentary particle applications.

According to the invention the nanocarbon particles are formed by dehydration of the disaccharide derivatives.

The method according to the present invention achieves an economical carbon coating of porous and microcellular materials. The colloidal liquid produced from disaccharide derivatives before final sintering contains not only pure carbon particles, but also a specific hydrocarbon. These hydrocarbons become nano carbon during the final sintering and create a strong bond between the microcellular material and the nanoparticles during this process. The technology provides a carbon coating over the entire cross action of the substrate.

According to the present invention carbon is formed, which is refined during the final heat treatment.

The pH value of the nano carbon is inherited from the substrate, in case of malm substrate the pH value is 8 to 8.5. The water absorption is inherited from the substrate and lowered by the nano carbon coating.

The nano carbon coating has disinfecting properties.

A malm coated with the nano carbon was left in water for two weeks and there were no dissolved substances from neither the colloidal components nor the malm.

It is an advantage of the present invention the substrate coated with the nano carbon according to the present invention is a good bacterial carrier, and with this bacterial carrier the seed can be coated or the substrate forming the bacterial carrier may be put close to the seed.

## Claims

1. A method of preparing a colloid liquid for carbonization, comprising the following steps:
- Heating a disaccharide derivative to a first temperature range, in which the disaccharide derivative melts;
- Heating the disaccharide derivative to a second temperature range, in which the disaccharide derivative is carbonized, wherein the temperature of the second temperature range is higher than the temperature of the first temperature range; and
- Directing a superheated stream on the disaccharide derivative.

2. The method of claim 1, wherein the disaccharide derivative is C₁₂H₂₂O₁₁.

3. The method of claim 1 or 2, wherein the first temperature range is between 180°C to 190°C.

4. The method of according to anyone of claims 1 to 3, wherein the second temperature range is between 220°C to 230°C.

5. The method of according to anyone of claims 1 to 4, wherein the temperature of the superheated stream is in a range between 220°C to 230°C.

6. A method of carbonating a substrate comprising the following steps:
- Coating the substrate with the colloid liquid made by any one of claims 1 to 5; and
- Sintering the substrate.

7. The method according to claim 6, wherein the step of sintering the substrate comprises the step of
- Pre-sintering the substrate in a third temperature range; and
- Post-sintering the substrate in a fourth temperature range, wherein the temperature of the fourth temperature range is higher than the temperature of third temperature range.

8. The method according to claim 6 or 7, wherein the third temperature range ranges from approximately 150°C to approximately 250°C.

9. The method according to any one of claims 6 to 8, wherein the fourth temperature range ranges from approximately 250°C to approximately 400°C.

10. The method according to any one of claims 6 to 9, wherein the step of sintering the substrate and/or post sintering the substrate in a fourth temperature range is carried out in an inert gas atmosphere.

11. The method according to any one of claims 6 to 10, further comprising the step of adding an anticoagulant additive to the colloid liquid.

12. The method according to any one of claims 6 to 11, wherein the substrate is a microcellular structure.

13. A substrate coated with nano carbon by a method according to anyone of claims 6 to 12.

14. A seed covered with the coated substrate according to claim 13.
